# EUROPÄISCHE PATENTSCHRIFT

(11) **EP 1 647 800 B1**
(45) Veröffentlichungstag und Bekanntmachung des Hinweises auf die Patenterteilung: **18.11.2009**
(21) Anmeldenummer: 05020862.8
(22) Anmeldetag: 24.09.2005
(51) Int. Cl.: G01B 11/08, G01B 11/10, A24C 5/34

(54) **Vorrichtung und Verfahren zum Messen des Durchmessers eines stabförmigen Gegenstandes insbesondere der Tabak verarbeitenden Industrie**
Apparatus and method for measuring the diameter of a rod-shaped article particularly of the tobacco processing industry
Méthode et dispositif pour la mesure du diamètre d'un article en forme de tige notamment de l'industrie du tabac

(30) Priorität: 13.10.2004 DE 102004049879
(43) Veröffentlichungstag der Anmeldung: 19.04.2006
(73) Patentinhaber: Hauni Maschinenbau Aktiengesellschaft, 21033 Hamburg (DE)
(72) Erfinder: Schröder, Dierk, Dr., 22399 Hamburg (DE)
(74) Vertreter: Klinghardt, Jürgen

(56) Entgegenhaltungen:
- EP-A- 0 909 537
- EP-A- 1 429 111
- DE-A1- 10 304 503
- DE-A1- 19 523 273
- DE-A1- 19 806 288
- GB-A- 2 149 101
- US-A- 4 432 648
- US-A- 4 880 991

## Beschreibung

Die Erfindung betrifft eine Vorrichtung zum Messen des Durchmessers mindestens eines stabförmigen Gegenstandes der Tabak verarbeitenden Industrie, mit mindestens einer, vorzugsweise optischen, Messanordnung, die eine Strahlenquelle zur Erzeugung eines Strahls zum Bestrahlen des stabförmigen Gegenstandes und eine Erfassungseinrichtung zur Erzeugung von die vom stabförmigen Gegenstand hervorgerufene Abschattung des Strahls angebenden Signalen aufweist, wobei der stabförmige Gegenstand im Strahlengang zwischen der Strahlenquelle und der Erfassungseinrichtung positionierbar oder durch den Strahlengang führbar und aus den von der Erfassungseinrichtung erzeugten Signalen der Durchmesser des stabförmigen Gegenstandes ermittelbar ist, und mit einer Strahlenteilereinrichtung, die den Strahl von der Strahlenquelle in mehrere Teilstrahlen aufteilt und in unterschiedlichen Richtungen auf den stabförmigen Gegenstand leitet, wobei die Erfassungseinrichtung mehrere Sensormittel aufweist, von denen jedes Sensormittel einem Teilstrahl zugeordnet ist und ein die vom stabförmigen Gegenstand hervorgerufene Abschattung des Teilstrahles angebendes Signal erzeugt. Ferner betrifft die Erfindung ein Verfahren zum Messen des Durchmessers mindestens eines stabförmigen Gegenstandes der Tabak verarbeitenden Industrie, mit den Schritten,
mit Hilfe einer Strahlenteilereinrichtung einen, vorzugsweise optischen, Strahl in mehrere Teilstrahlen aufzuteilen und die mehreren Teilstrahlen in unterschiedlichen Richtungen auf den stabförmigen Gegenstand zu leiten,
in einer Erfassungseinrichtung mehrere Signale zu erzeugen, von denen jeweils ein Signal die vom stabförmigen Gegenstand (28) hervorgerufene Abschattung eines Teilstrahles angibt, und
aus den Signalen den Durchmesser des stabförmigen Gegenstandes zu ermitteln.

Unter dem Begriff "stabförmiger Gegenstand der Tabak verarbeitenden Industrie" werden Zigaretten mit und ohne Filter, Filterstäbe, Zigarillos, Zigarren und sonstige Rauchstäbe verstanden, und zwar unabhängig davon, in welchem Produktionsschritt sich diese Gegenstände befinden. Ferner umfasst der Begriff "staubförmiger Gegenstand" auch einen Endlosstrang, der in einem bestimmten Produktionsschritt als ganzes oder als bereits zerteiltes Strangstück, beispielsweise zur Herstellung der zuvor erwähnten Rauchartikel, vorliegt.

Insbesondere bei der Herstellung von Zigaretten und Filtern ist der Durchmesser ein wesentliches Qualitätsmerkmal, das bei der Herstellung zu überwachen ist. Dabei werden gewöhnlich die stabförmigen Gegenstände in Längsrichtung, also in Richtung ihrer Längsachse, kontinuierlich oder diskontinuierlich durch eine Messanordnung transportiert.

Die Schwierigkeiten genauer Messungen des Durchmessers liegen darin, dass die stabförmigen Gegenstände oft 'unrund' sind, also die Querschnitte senkrecht zu den Längsachsen mehr oder weniger von der Kreisform abweichen.

In der EP 0 909 537 A1 ist eine Messvorrichtung bekannt, bei welcher die Bestrahlungseinrichtung einen parallel gebündelten breiten Strahl erzeugt, der an einem Spiegel um 90° auf eine Erfassungseinrichtung reflektiert wird. Der stabförmige Gegenstand erstreckt sich parallel zum Spiegel und rechtwinkelig zum Strahlengang und ist dabei so positioniert, dass ein Teil des Strahl direkt von der Bestrahlungseinrichtung auf den stabförmigen Gegenstand und ein anderer Teil des Strahls nach Reflektion am Spiegel auf den stabförmigen Gegenstand trifft, so dass der auf die Erfassungseinrichtung auftreffende Strahl zwei nebeneinander liegende Abschattungsbereiche aufweist, die den Durchmesser in zwei rechtwinkelig zueinander stehenden Querschnittsachsen repräsentieren. Zwar eignet sich diese bekannte Messvorrichtung auch für diejenigen stabförmigen Gegenstände, bei denen eine Drehung um deren Längsachse prozessbedingt nicht erforderlich oder gar nicht gewünscht ist, und somit auch insbesondere für Endlostränge. Jedoch ist eine Messung des Durchmessers in nur zwei Querschnittsachsen in vielen Fällen zu ungenau.

Ferner sind in der DE 195 23 273 A1 ein Verfahren und eine Anordnung zum Messen des Durchmessers eines stabförmigen Gegenstandes der Tabak verarbeitenden Industrie, insbesondere einer Zigarette, beschrieben, wobei der stabförmige Gegenstand während seines Transportes durch eine stationäre Messanordnung gedreht, während der Drehung einer Bestrahlung ausgesetzt, die Größe mindestens einer durch den stabförmigen Gegenstand hervorgerufenen Abschattung der Strahlung entsprechend erfasst und in ein elektrisches Messsignal umgesetzt und aus mehreren solcher Messsignale ein Signal für den Durchmesser des stabförmigen Gegenstandes gebildet wird. Zwar lässt sich mit dieser bekannten Anordnung die Messgenauigkeit erhöhen, jedoch ist diese bekannte Anordnung insbesondere nicht für die Messung des Durchmessers eines Endlosstranges geeignet, bei welchem eine Drehung um seine Längsachse nicht stattfindet.

Die DE 198 06 288 A1, welche den nächstkommenden Stand der Technik bildet, von der die vorliegende Erfindung ausgeht, offenbart eine Vorrichtung und ein Verfahren der eingangs genannten Art. Bei einer Ausführung in diesem Stand der Technik ist am Ausgang einer Strahlenquelle ein Strahlenteiler vorgesehen, der den von der Strahlenquelle erzeugten Strahl in drei Teilstrahlen aufteilt und in unterschiedlichen Richtungen auf einen stabförmigen Gegenstand leitet. Ferner ist eine Erfassungseinrichtung vorgesehen, die drei Sensormittel aufweist, von denen jedes Sensormittel einem Teilstrahl zugeordnet ist.

Es ist Aufgabe der vorliegenden Erfindung, eine Vorrichtung und ein Verfahren der eingangs genannten Art anzugeben, welche eine besonders einfache Ausbildung der Erfassungseinrichtung ermöglichen und gleichwohl die Messung von Durchmessern von stabförmigen Gegenständen mit hoher Messgenauigkeit erlauben, ohne dass sowohl die Messanordnung als auch die stabförmigen Gegenstände einer rotierenden Bewegung unterworfen werden müssen, und sich somit insbesondere für die Messung von Durchmessern von Endlossträngen eignen.

Diese Aufgabe wird gemäß einem ersten Aspekt der Erfindung gelöst mit einer Vorrichtung zum Messen des Durchmessers mindestens eines stabförmigen Gegenstandes der Tabak verarbeitenden Industrie, mit mindestens einer, vorzugsweise optischen, Messanordnung, die eine Strahlenquelle zur Erzeugung eines Strahls zum Bestrahlen des stabförmigen Gegenstandes und eine Erfassungseinrichtung zur Erzeugung von die vom stabförmigen Gegenstand hervorgerufene Abschattung des Strahls angebenden Signalen aufweist, wobei der stabförmige Gegenstand im Strahlengang zwischen der Strahlenquelle und der Erfassungseinrichtung positionierbar oder durch den Strahlengang führbar und aus den von der Erfassungseinrichtung erzeugten Signalen der Durchmesser des stabförmigen Gegenstandes ermittelbar ist, und mit einer Strahlenteilereinrichtung, die den Strahl von der Strahlenquelle in mehrere Teilstrahlen aufteilt und in unterschiedlichen Richtungen auf den stabförmigen Gegenstand leitet, wobei die Erfassungseinrichtung mehrere Sensormittel aufweist, von denen jedes Sensormittel einem Teilstrahl zugeordnet ist und ein die vom stabförmigen Gegenstand hervorgerufene Abschattung des Teilstrahles angebendes Signal erzeugt, gekennzeichnet durch eine Strahlenvereinigungseinrichtung, die die Teilstrahlen nach Auftreffen auf den stabförmigen Gegenstand zu einem gemeinsamen Strahl wieder vereinigt, in dem die Teilstrahlen im Wesentlichen parallel zueinander ausgerichtet sind.

Gemäß einem zweiten Aspekt der Erfindung wird die zuvor angegebene Aufgabe gelöst mit einem Verfahren zum Messen des Durchmessers mindestens eines stabförmigen Gegenstandes der Tabak verarbeitenden Industrie, mit den Schritten,
mit Hilfe einer Strahlenteilereinrichtung einen, vorzugsweise optischen, Strahl in mehrere Teilstrahlen aufzuteilen und die mehreren Teilstrahlen in unterschiedlichen Richtungen auf den stabförmigen Gegenstand zu leiten,
in einer Erfassungseinrichtung mehrere Signale zu erzeugen, von denen jeweils ein Signal die vom stabförmigen Gegenstand hervorgerufene Abschattung eines Teilstrahles angibt, und
aus den Signalen den Durchmesser des stabförmigen Gegenstandes zu ermitteln,
dadurch gekennzeichnet, dass die Teilstrahlen nach Auftreffen auf den stabförmigen Gegenstand mit Hilfe einer Strahlenvereinigungseinrichtung wieder zu einem gemeinsamen Strahl vereinigt werden, in dem die Teilstrahlen im Wesentlichen parallel zueinander ausgerichtet sind.

Demnach wird für eine Mehrzahl von Messungen des Durchmessers des stabförmigen Gegenstandes eine entsprechende Anzahl von Teilstrahlen aus dem von der Strahlenquelle erzeugten (Haupt-)Strahl verwendet. Da diese Teilstrahlen in unterschiedlichen Richtungen auf den stabförmigen Gegenstand geleitet werden, erfolgt jede Messung aus einer anderen Perspektive. Je größer die Anzahl der verwendeten Teilstrahlen und der daraus resultierenden Messungen gewählt wird, um so genauer kann die Querschnittsform des stabförmigen Gegenstandes ermittelt werden.

Dadurch, dass erfindungsgemäß mit Hilfe einer Strahlenvereinigungseinrichtung die Teilstrahlen nach Passieren des stabförmigen Gegenstandes zu einem gemeinsamen Strahl wiedervereinigt werden, in dem die Teilstrahlen im wesentlichen parallel zueinander ausgerichtet sind, lässt sich die Erfassungseinrichtung auf konstruktiv einfache Weise ausbilden.

Die mit der Erfindung verbundenen weiteren Vorteile bestehen zum einen darin, dass der Durchmesser des stabförmigen Gegenstandes sehr genau, insbesondere auch bei unrunden stabförmigen Gegenständen, ermittelt werden kann, und zum anderen darin, dass weder eine Drehbewegung der Messanordnung noch eine Drehung des stabförmigen Gegenstandes um seine Längsachse notwendig ist und somit die erfindungsgemäße Messung keine rotierenden Komponenten erfordert. Somit eignet sich die Erfindung insbesondere bei Anwendungen, wo eine rotierende Bewegung insbesondere prozessbedingt nicht erforderlich oder gar nicht gewünscht ist, so dass sich die erfindungsgemäße Messung insbesondere für Endlosstränge eignet.

Letzteres hat zur Folge, dass der stabförmige Gegenstand während der Messung bewegungslos verharren kann. Alternativ ist es aber auch denkbar und gerade für einen laufenden Prozess vorteilhaft, den stabförmigen Gegenstand kontinuierlich oder diskontinuierlich in längsaxialer Richtung durch die Messanordnung zu bewegen, wobei während der Produktion der stabförmigen Gegenstände in einem Produktionsschritt ein Endlosstrang vorliegen kann, der als ganzes oder als bereits zerteiltes Strangstück in längsaxialer Richtung durch die Messanordnung bewegt werden kann.

Dadurch dass die Erfindung eine nahezu unendliche Vielzahl von Messungen des Durchmessers an ein und derselben Stelle eines stabförmigen Gegenstandes ermöglicht, lässt sich die Querschnittsform und die 'Unrundheit' sowie auch der minimale und der maximale Durchmesser des stabförmigen Gegenstandes ermitteln. Letzteres ist insbesondere wichtig, um festzustellen, ob sich der Durchmesser noch innerhalb erlaubter. Grenzen bewegt. Ferner lässt sich die Erfindung insbesondere vorteilhaft zur Messung von im Querschnitt elliptischen Zigaretten und Filterstücken verwenden, um auf diese Weise jeweils zueinander passenden Filterstücke und Zigarettenstränge zu ermitteln.

Bevorzugte Ausführungen und Weiterbildungen der Erfindung sind in abhängigen Ansprüchen angegeben.

Bevorzugt sind die Sensormittel im Wesentlichen auf einer Linie nebeneinander angeordnet sind. Diese Ausführung ermöglicht eine besonders einfache Ausbildung der Erfassungseinrichtung, da die Sensormittel in einer nebeneinander liegenden Anordnung auf konstruktiv besonders einfache Weise zusammengefasst werden können.

Auch kann die Strahlenvereinigungseinrichtung bevorzugt Spiegel und/oder mindestens ein Prisma mit mindestens einer Spiegelfläche aufweisen, um auf konstruktiv besonders einfache Weise die Teilstrahlen wieder in die gleiche Richtung umzulenken.

Zweckmäßigerweise leitet die Strahlenteilereinrichtung die Teilstrahlen derart auf den stabförmigen Gegenstand, dass jeder Teilstrahl vom stabförmigen Gegenstand nur teilweise abgeschattet wird. Somit werden von der Erfassungseinrichtung nebeneinander liegende Hell-Dunkel-Übergänge der aus den verschiedenen Richtungen auf den stabförmigen Gegenstand treffenden Teilstrahlen erfasst, aus denen dann der Durchmesser bzw. die Dicke des stabförmigen Gegenstandes jeweils in den senkrecht zu den Teilstrahlen verlaufenden Richtungen ermittelt werden kann.

Gewöhnlich wird in einer der Erfassungseinrichtung nachgeschalteten Auswerteeinrichtung der Durchmesser des stabförmigen Gegenstandes aus den Signalen von der Erfassungseinrichtung ermittelt. Bevorzugt kann mit Hilfe eines Mittelwertbildners, der in der Auswerteeinrichtung enthalten ist, ein Mittelwert aus den Signalen von den Sensormitteln gebildet werden.

Bei einer konstruktiv besonders bevorzugten Ausführung weist die Strahlenteilereinrichtung Spiegel auf, die aus dem Strahl zumindest einige der Teilstrahlen in unterschiedliche Richtungen auf den stabförmigen Gegenstand umlenken. Alternativ oder zusätzlich kann mindestens ein Prisma mit mindestens einer Spiegelfläche vorgesehen sein, die zumindest einige der Teilstrahlen entsprechend umlenkt. Mit Hilfe der Spiegel bzw. der Spiegelfläche(n) werden demnach die Teilstrahlen aus dem Hauptstrahl heraus extrahiert.

Zwischen der Strahlenquelle und der Strahlenteilereinrichtung kann eine Anordnung zur im Wesentlichen parallelen Ausrichtungen des Strahls von der Strahlenquelle vorgesehen sein. Eine solche Anordnung bietet sich insbesondere dann an, wenn die Strahlenquelle einen divergierenden Strahl erzeugt, was gewöhnlich der Fall ist. Ferner wird durch eine solche Anordnung die Aufteilung des Strahls in Teilstrahlen vereinfacht, da aufgrund der parallelen Ausrichtung nur noch die einzelnen parallelen Abschnitte des Hauptstrahles als Teilstrahlen extrahiert werden müssen. Vorzugsweise weist eine solche Anordnung eine Kollimatorlinse auf. Ferner kann dieser Anordnung eine Zylinder-Linse nachgeschaltet sein, deren Verwendung für die Erzeugung von Teilstrahlen vorteilhaft ist.

Zweckmäßigerweise kann als Strahlenquelle ein Laser, insbesondere eine Laser-Diode, verwendet werden und/oder können die Sensormittel aus Charged-Coupled-Device-Elementen bestehen.

Weitere bevorzugte Ausführungen der Erfindung sind in den abhängigen Ansprüchen angegeben.

Nachfolgend wird ein bevorzugtes Ausführungsbeispiel der Erfindung anhand der beiliegenden Zeichnungen näher erläutert. Es zeigen:
- Figur 1: in schematischer perspektivischer Ansicht eine Zigarettenstrangmaschine, in der die wesentlichen Bauteile sichtbar dargestellt sind;
- Figur 2: schematisch in einer Darstellung rechtwinkelig zur Längsachse und Bewegungsrichtung des Zigarettenstranges eine erste bevorzugte Ausführung einer in der Zigarettenstrangmaschine von Figur 1 verwendeten optischen Messanordnung mit ihren wesentlichen Komponenten; und
- Figur 3: schematisch in einer Darstellung rechtwinkelig zur Längsachse und Bewegungsrichtung des Zigarettenstranges eine zweite bevorzugte Ausführung einer in der Zigarettenstrangmaschine von Figur 1 verwendeten optischen Messanordnung mit ihren wesentlichen Komponenten.

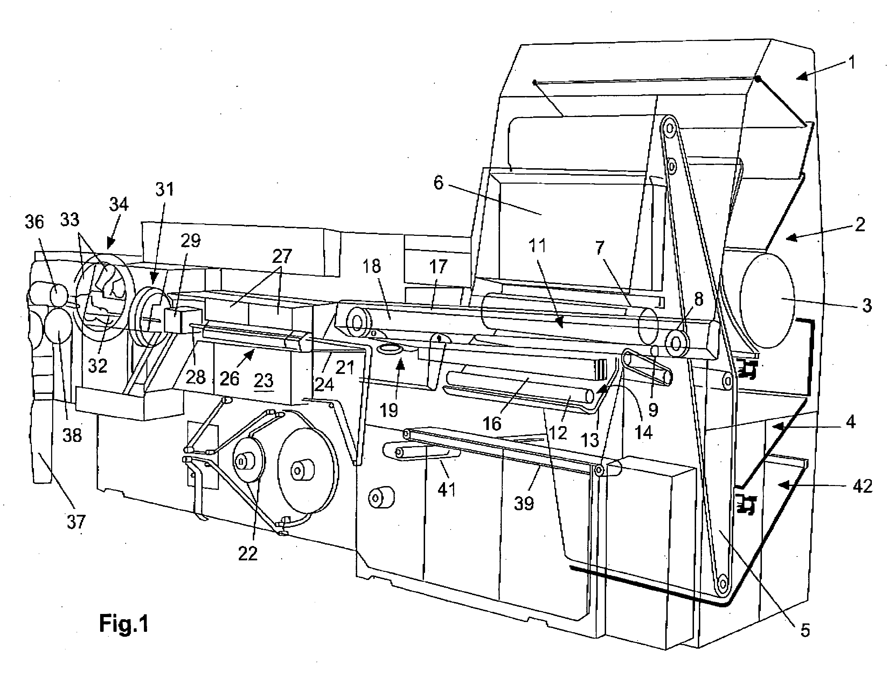

In Fig. 1 ist in schematischer perspektivischer Ansicht eine Zigarettenstrangmaschine vom Typ "PROTOS" der Anmelderin gezeigt, in welcher die wesentlichen Bauteile sichtbar dargestellt sind. Von dieser Zigarettenstrangmaschine werden nachfolgend der Aufbau und die Funktion kurz beschrieben.

Von einer Schleuse 1 wird ein Vorverteiler 2 portionsweise mit Tabak beschickt. Eine Entnahmewalze 3 des Vorverteilers 2 ergänzt gesteuert einen Vorratsbehälter 4 mit Tabak, aus dem ein Steilförderer 5 Tabak entnimmt, der einen Stauschacht 6 gesteuert beschickt. Aus dem Stauschacht 6 entnimmt eine Stiftwalze 7 einen gleichförmigen Tabakstrom, der von einer Ausschlagwalze 8 aus den Stiften der Stiftwalze 7 herausgeschlagen und auf ein mit konstanter Geschwindigkeit umlaufendes Streutuch 9 geschleudert wird.

Ein so auf dem Streutuch 9 gebildetes Tabakvlies wird in eine Sichteinrichtung 11 geschleudert, die im wesentlichen aus einem Luftvorhang besteht, den größere bzw. schwere Tabakteile passieren, während alle anderen Tabakteilchen von der Luft in einen von einer Stiftwalze 12 und einer Wand 13 gebildeten Trichter 14 gelenkt werden. Von der Stiftwalze 12 wird der Tabak in einen Tabakkanal 16 gegen einen Strangförderer 17 geschleudert, an dem der Tabak mittels in eine Unterdruckkammer 18 gesaugter Luft gehalten und ein Tabakstrang aufgeschauert wird.

Ein Egalisator 19 entfernt überschüssigen Tabak von dem Tabakstrang, der dann auf einem im Gleichlauf geführten Zigarettenpapierstreifen 21 gelegt wird. Der Zigarettenpapierstreifen 21 wird von einer Bobine 22 abgezogen, durch ein Druckwerk 23 geführt und auf ein angetriebenes Formatband 24 gelegt. Das Formatband 24 transportiert den Tabakstrang und den Zigarettenpapierstreifen 21 durch ein Format 26, in dem der Zigarettenpapierstreifen 21 um den Tabakstrang gefaltet wird, so dass noch eine Kante absteht, die von einem nicht dargestellten Leimapparat in bekannter Weise beleimt wird. Darauf wird die Klebnaht geschlossen und von einer Tandemnahtplätte 27 getrocknet.

Ein so gebildeter Zigarettenstrang 28 durchläuft eine Mess- und Regelungseinheit 29, und wird von einem Messeraparat 31 in doppeltlange Zigaretten 32 geschnitten. Die doppeltlangen Zigaretten 32 werden von einer gesteuerte Arme 33 aufweisenden Übergabevorrichtung 34 auf eine Übernahmetrommel 36 in einer Filteransetzmaschine 37 übergeben, auf deren Schneidtrommel 38 sie mit einem Kreismesser in Einzelzigaretten geteilt werden.

Förderbänder 39, 41 fördern überschüssigen Tabak in einen unter dem Vorratsbehälter 4 angeordneten Behälter 42, aus dem der rückgeführte Tabak von dem Steilförderer 5 wieder entnommen wird.

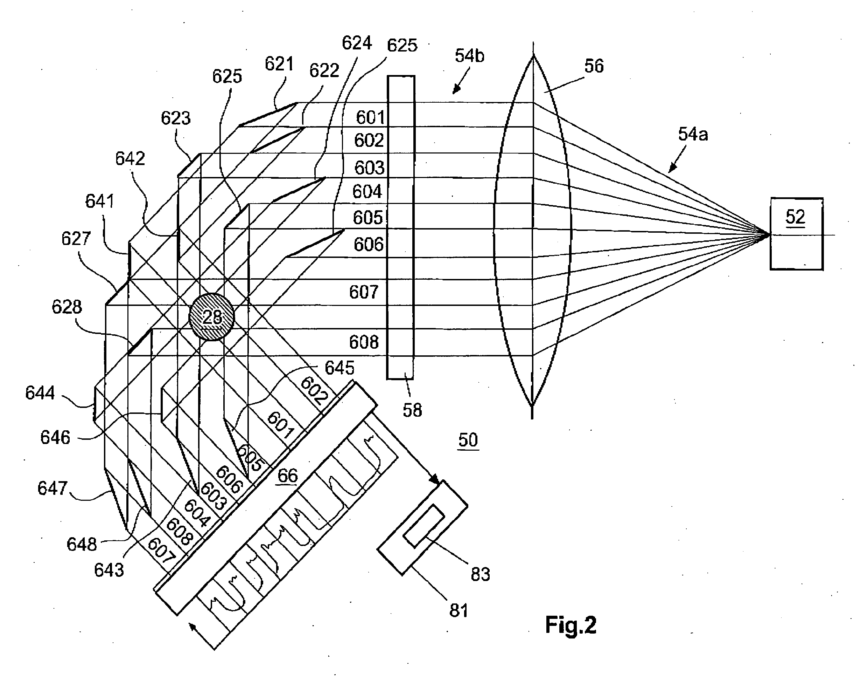

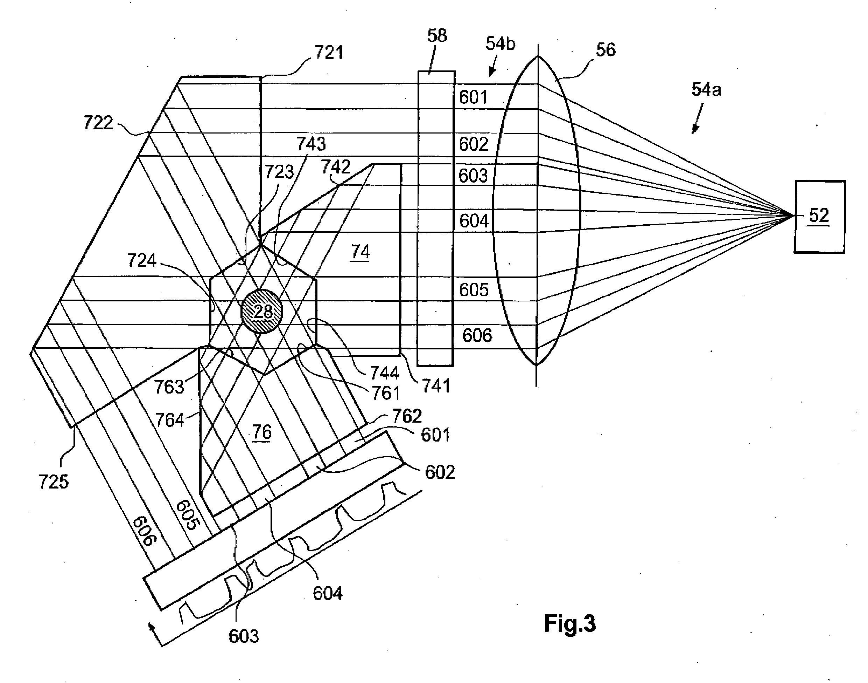

Die in der Zigarettenstrangmaschine von Fig. 1 enthaltene Mess- und Regelungseinheit 29 weist eine optische Messanordnung, von der in Fig. 2 eine erste bevorzugte Ausführung 50 und in Fig. 3 eine zweite bevorzugte Ausführung 50a dargestellt ist.

Die optische Messanordnung 50 gemäß Fig. 2 weist eine Strahlenquelle 52 auf, die vorzugsweise mindestens eine Laser-Diode enthält oder aus einer solchen besteht. Die Strahlenquelle 52 ist im dargestellten Ausführungsbeispiel gemäß Figur 2 so ausgebildet, dass sie einen divergierenden Strahl 54a erzeugt. Der divergierende Strahl 54a wird mit Hilfe einer nachgeschalteten Kollimatorlinse 56 in einen parallelen Strahl 54b gewandelt, der anschließend eine Zylinderlinse 58 durchläuft.

Hinter der Zylinderlinse 58 wird der parallele Strahl 54b, der wie der Strahl 54a als Hauptstrahl bezeichnet werden kann, in Teilstrahlen 601 bis 608 aufgeteilt, die in unterschiedlichen Richtungen den Zigarettenstrang 28 treffen, und zwar derart, dass jeder Teilstrahl vom Zigarettenstrang 28 nur teilweise abgeschattet wird. Dabei wird der Zigarettenstrang 28 durch die optische Messanordnung 50 so geführt, dass die Teilstrahlen 601 bis 608 etwa im rechten Winkel zur Längsachse, die rechtwinklig zur Zeichnungsebene von Figur 2 verläuft, und somit zur Bewegungsrichtung des Zigarettenstranges 28 verlaufen.

Wie Figur 2 ferner erkennen lässt, bilden die Teilstrahlen 601 bis 608 zunächst nebeneinander liegende parallele Strahlenabschnitte des Hauptstrahles 54b, und zwar direkt hinter der Zylinderlinse 58. Anschließend werden im dargestellten Ausführungsbeispiel die Teilstrahlen 601 bis 608 an Spiegeln reflektiert, wobei einige Teilstrahlen erst nach Auftreffen auf den Zigarettenstrang 28 und andere Teilstrahlen bereits vor Auftreffen auf den Zigarettenstrang 28 umgelenkt werden.

Der erste Teilstrahl 601, bei dem es sich um den gemäß Figur 2 'obersten' Teilstrahl handelt, wird zunächst durch einen Spiegel 621 um 45° auf einen Spiegel 641 umgelenkt, wo er um 90° auf den Zigarettenstrang 28 reflektiert wird. In gleicher Weise wird der benachbarte zweite Teilstrahl 602 zunächst von einem Spiegel 622 um 45° und anschließend von einem Spiegel 642 um 90° in Richtung auf den Zigarettenstrang 28 umgelenkt. Während die Spiegel 621 und 622 derart nebeneinander angeordnet sind, dass die ersten und zweiten Teilstrahlen 601 und 602 nach Reflexion an diesen weiterhin nebeneinander laufen, sind die beiden Spiegel 641 und 642 so voneinander beabstandet, dass der erste Teilstrahl 601 die eine Seite des Zigarettenstranges 28 und der zweite Teilstrahl 602 die gegenüber liegende andere Seite des Zigarettenstranges 28 streift. Dementsprechend richtet sich der Abstand der beiden Spiegel 641 und 642 voneinander nach der Dicke des Zigarettenstranges 28. Die Ausrichtung der beiden Spiegel 641 und 642 ist allerdings zueinander identisch, so dass diese beide Spiegel 641 und 642 parallel zueinander ausgerichtet sind.

Der dritte Teilstrahl 603 wird an einem Spiegel 623 um 90° reflektiert, um dann direkt den Zigarettenstrang 28 zu treffen. In gleicher Weise geschieht dies auch mit dem fünften Teilstrahl 605 mit Hilfe eines Spiegels 625. Somit sind der dritte Teilstrahl 603 und der fünfte Teilstrahl 605 beim Passieren des Zigarettenstranges 28 parallel zueinander ausgerichtet, wobei der dritte Teilstrahl 603 die eine Seite des Zigarettenstranges 28 und der fünfte Teilstrahl 605 die gegenüberliegende andere Seite des Zigarettenstranges 28 berührt. Dementsprechend sind die beiden Spiegel 623 und 625 voneinander beabstandet, haben aber die gleiche Ausrichtung. Somit verlaufen beim Auftreffen auf den Zigarettenstrang 28 der dritte Teilstrahl 603 und der fünfte Teilstrahl 605 in einem Winkel von 45° gegenüber dem ersten Teilstrahl 601 und dem zweiten Teilstrahl 602.

Der vierte Teilstrahl 604 und der sechste Teilstrahl 606 bilden ein weiteres Paar und passieren den Zigarettenstrang 28 in einem rechten Winkel gegenüber dem ersten Teilstrahl 601 und dem zweiten Teilstrahl 602. Hierzu wird der vierte Teilstrahl 604 an einem Spiegel 624 und der sechste Teilstrahl 606 an einem Spiegel 626 um 45° in Richtung auf den Zigarettenstrang 28 reflektiert. Hierzu sind diese beiden Spiegel 624 und 626 parallel zueinander ausgerichtet, jedoch in einem solchen Abstand voneinander angeordnet, dass der vierte Teilstrahl 604 den Zigarettenstrang 28 an seiner einen Seite und der sechste Teilstrahl 606 den Zigarettenstrang 28 an seiner gegenüberliegenden Seite streift.

Im Gegensatz zu den Teilstrahlen 601 bis 606 sind der siebte Teilstrahl 607 und der achte Teilstrahl 608 von der Zylinderlinse 58 direkt auf den Zigarettenstrang 28 gerichtet, bevor diese dann durch einen dahinterliegenden Spiegel 627 bzw. 628 reflektiert werden. Hierzu haben der siebte Teilstrahl 607 und der achte Teilstrahl 608 einen solchen Abstand voneinander, dass der siebte Teilstrahl 607 den Zigarettenstrang 28 an seiner einen Seite und der achte Teilstrahl 608 den Zigarettenstrang 28 an seiner gegenüberliegenden anderen Seite trifft. Die beiden voneinander beabstandeten siebten und achten Teilstrahlen 607 und 608, die vor Passieren des Zigarettenstranges 28 keine Richtungsänderung erfahren, verlaufen somit in einem Winkel von 135° zu dem ersten und zweiten Teilstrahl 601 und 602.

Im dargestellten Ausführungsbeispiel sind die Teilstrahlen 601 bis 608 als Parallelstrahlen mit gleichem und über deren Verlauf konstantem Querschnitt ausgebildet. Es sind aber auch Konfigurationen denkbar, bei denen sich beispielsweise nach einer Reflexion an einem Spiegel der Querschnitt des Teilstrahles ändert. Ferner ist es ebenfalls grundsätzlich denkbar, bei Bedarf konvergierende oder divergierende Teilstrahlen zu bilden.

Aufgrund des zuvor beschriebenen Verlaufes der Teilstrahlen 601 bis 608 findet eine teilweise Abschattung des Zigarettenstranges 28 jeweils über einen Winkelbereich statt, der im dargestellten Ausführungsbeispiel etwa 90° beträgt, wobei sich diese abgeschatteten Winkelbereiche gegenseitig überlappen, wie Figur 2 erkennen lässt.

Selbstverständlich können die Breite und der Abstand der Teilstrahlen zueinander durch entsprechende Konfiguration der Umlenkspiegel so gebildet sein, dass auch nur ein Winkelbereich abgeschattet werden kann, der kleiner als 90° ist. Allerdings sollte im dargestellten Ausführungsbeispiel, in dem ja acht Teilstrahlen zur Bestrahlung des Zigarettenstranges 28 verwendet werden, der abzuschattende Winkelbereich nicht kleiner als 45° gewählt werden, da ansonsten unerwünschte Lücken in Form von nichtabgeschatteten Bereichen entstehen. Ferner sollte der abzuschattende Winkelbereich nicht größer als 180° sein, da ansonsten unerwünschte Überlappungen von zwei parallelen Teilstrahlen desselben Teilstrahlenpaares entstehen würden, wodurch eine eindeutige Zuordnung erschwert oder gar unmöglich gemacht würde.

Wie Figur 2 erkennen lässt, sind direkt hinter der Zylinderlinse 58 die Teilstrahlen so definiert, dass die ersten bis sechsten Teilstrahlen 601 bis 606 direkt nebeneinander liegen, während der siebte Teilstrahl 607 sowohl vom sechsten Teilstrahl 606 als auch vom achten Teilstrahl 608 beabstandet ist, wobei ausweislich von Figur 2 der Abstand jeweils etwa einer Breite eines Teilstrahles entspricht. In den so gebildeten Lücken zwischen dem sechsten Teilstrahl 606 und dem siebten Teilstrahl 607 einerseits und dem siebten Teilstrahl 607 und dem achten Teilstrahl 608 andererseits existieren allerdings ebenfalls Strahlenabschnitte aus dem Hauptstrahl 54b, die ― in gleicher Weise wie die Teilstrahlen 601 bis 608 - Teilstrahlen darstellen. Jedoch werden diese Teilstrahlen nicht weiter genutzt. Denn der zwischen dem sechsten Teilstrahl 606 und dem siebten Teilstrahl 607 verlaufende Strahlenabschnitt wird durch den Spiegel 641 direkt auf die Zylinderlinse 58 zurückreflektiert, während der zwischen dem siebten Teilstrahl 607 und dem achten Teilstrahl 608 verlaufende Strahlenabschnitt vollständig vom Zigarettenstrang 28 abgeschattet wird. Demnach wird im dargestellten Ausführungsbeispiel nicht die gesamte Breite des Hauptstrahles 54b für die Bildung der hier relevanten Teilstrahlen 601 bis 608 verwendet. An dieser Stelle sei jedoch angemerkt, dass selbstverständlich auch andere Konfigurationen denkbar sind, in denen eine höhere oder niedrigere Anzahl von Teilstrahlen zur teilweisen Abschattung des Zigarettenstranges 28 verwendet und beispielsweise auch sämtliche Strahlenabschnitte des Hauptstrahles 54b zur Bildung von relevanten Teilstrahlen benutzt werden können.

Wie Figur 2 ferner erkennen lässt, sind die einzelnen Spiegel jeweils so konfiguriert, dass deren effektiver Reflexionsquerschnitt nicht größer als der Querschnitt des jeweils von ihnen reflektierten Teilstrahles ist, um eine störende Beeinflussung des jeweils benachbarten Teilstrahles zu verhindern. Dies hat zur Folge, dass die Spiegel mit den kleineren Reflektionswinkeln (z.B. die Spiegel 621, 622, 624, 626) eine größere Länge besitzen als die Spiegel mit den höheren Reflektionswinkeln (z.B. 623, 625, 641, 642).

Es ist ebenfalls möglich, anstelle von diskreten Spiegeln, wie in Figur 2 dargestellt, einen optischen Körper vorzusehen, in dem entsprechende spiegelnde Flächenabschnitte eingearbeitet sind. Ebenfalls ist es selbstverständlich denkbar, anstelle von Spiegeln auch beispielsweise Prismen o.dgl. zu verwenden.

Aus Figur 2 und der vorangegangenen Beschreibung wird deutlich, dass die Spiegel 621, 622, 623, 624, 625 und 626 als Strahlenteiler dienen. Dies trifft ferner auch auf den Spiegel 627, an dem der siebte Teilstrahl 607 nach Passieren des Zigarettenstranges 28 um 90° (gemäß Figur 2 nach unten) reflektiert wird, und den Spiegel 628 zu, an dem der achte Teilstrahl 608 nach Passieren des Zigarettenstranges 28 ebenfalls um 90° (gemäß Figur 2 nach unten) reflektiert wird. Demnach bilden die Spiegel 621 bis 628 im dargestellten Ausführungsbeispiel eine Strahlenteilereinrichtung.

Wie Figur 2 außerdem zeigt, werden im dargestellten Ausführungsbeispiel die Teilstrahlen 601 bis 608 im weiteren Verlauf des Strahlenganges durch zusätzliche Spiegel zu einem einzigen gemeinsamen Strahl wieder vereinigt und auf die Sensorzeile 66 geleitet. Aufgrund der zuvor beschriebenen Anordnung der Spiegel 641 und 642 werden der erste Teilstrahl 601 und der von ihm beabstandete parallele zweite Teilstrahl 602 nach Passieren des Zigarettenstranges 28 direkt rechtwinklig auf die Sensorzeile 66 geleitet. Für den dritten Teilstrahl 603 und den parallel in einem Abstand zu diesem verlaufenden fünften Teilstrahl 605 sind zwischen dem Zigarettenstrang 28 und der Sensorzeile 66 Spiegel 643 und 645 vorgesehen, an denen diese Teilstrahlen jeweils um etwa 45° reflektiert werden, bevor sie im rechten Winkel auf die Sensorzeile 66 treffen. Da der vierte Teilstrahl 604 und der im Abstand zu diesem parallel verlaufende sechste Teilstrahl 606 während des Passierens des Zigarettenstranges 28 etwa parallel zur Sensorzeile 66 gerichtet sind, sind zusätzliche Spiegel 644 und 646 vorgesehen, an denen diese Teilstrahlen um 90° in Richtung auf die Sensorzeile 66 umgelenkt werden. Für die Umlenkung des siebten Teilstrahles 607 und des achten Teilstrahles 608 sind im dargestellten Ausführungsbeispiel jeweils zwei zusätzliche Spiegel 627, 647 und 628, 648 erforderlich, die im Strahlengang nach dem Zigarettenstrang 28 angeordnet sind. Zunächst wird der siebte bzw. achte Teilstrahl 607 bzw. 608 am Spiegel 627 bzw. 628 um 90° (gemäß Figur 2 nach unten) reflektiert, bevor dann eine weitere Reflexion um 45° am Spiegel 647 bzw. 648 in Richtung auf die Sensorzeile 66 stattfindet.

Demnach dienen die Spiegel 641 bis 648 als Strahlenvereinigungseinrichtung, um die einzelnen Teilstrahlen 601 bis 608 in eine parallele nebeneinander liegende Ausrichtung zur Bildung eines gemeinsamen einzigen Strahls zu bringen, der senkrecht auf die Sensorzeile 66 auftrifft. In Figur 2 fällt auf, dass die Reihenfolge der einzelnen Teilstrahlen 601 bis 608 beim Auftreffen auf die Sensorzeile 66 eine andere ist, als beim Austritt aus der Zylinderlinse 58; dies spielt jedoch für die Bestimmung des Durchmessers keine Rolle. Selbstverständlich sind auch Konfigurationen denkbar, in denen die Teilstrahlen eine andere Reihenfolge einnehmen.

Im dargestellten Ausführungsbeispiel werden die Teilstrahlen 601 bis 608 von Beginn bis zum Ende ihres Strahlenganges insgesamt um 135° umgelenkt, bevor sie auf die Sensorzeile 66 auftreffen. Selbstverständlich ist aber auch eine andere Ausrichtung der Sensorzeile 66 denkbar.

Hinsichtlich möglicher alternativer Konfigurationen der Spiegel 641 bis 648 gilt im Übrigen das zuvor zu den Spiegeln 621 bis 628 Gesagte.

In Fig. 3 ist eine zweite bevorzugte Ausführung einer Messanordnung 50a dargestellt, die sich von der Messanordnung 50 gemäß Fig. 2 dadurch unterscheidet, das anstelle von diskreten Spiegeln drei separate Prismen 72, 74 und 76 vorgesehen sind, während die übrigen Komponenten die gleichen wie die bei der ersten Ausführung der optischen Messanordnung 50 gemäß Fig. 2 sind. Somit wird nachfolgend die zweite Ausführung der optischen Messanordnung 50a gemäß Fig. 3 im wesentlichen nur anhand der Unterschiede zur ersten Ausführung gemäß Fig.2 beschrieben.

Die drei separaten Prismen 72, 74, 76 sind zur Aufteilung, Ausrichtung und Vereinigung der Strahlung vorgesehen, wobei die Prismen 72, 74, 76 so ausgebildet sind, dass die Teilstrahlung jeweils senkrecht durch deren Oberflächen ein- und austreten, um Brechungseffekte zu vermeiden.

Im Gegensatz zur ersten Ausführung gemäß Fig. 2 wird hinter der Zylinderlinse 58 der parallele Strahl 54b bei der zweiten Ausführung der optischen Messanordnung 50a gemäß Fig. 3 nicht in acht, sondern in sechs Teilstrahlen 601 bis 606 aufgeteilt.

Der erste Teilstrahl 601, bei dem es sich um den gemäß Fig.3 'obersten' Teilstrahl handelt, tritt zunächst durch eine rechtwinklig gerichtete erste Fläche 721 in das erste Prisma 72 ein, wird dann an einer gegenüberliegenden, in Bezug auf den auftreffenden Teilstrahl um 120° abgewinkelt angeordneten zweiten Fläche 722 des ersten Prismas 72 in Richtung auf den Zigarettenstrang 28 reflektiert und tritt durch eine rechtwinklig gerichtete dritte Fläche 723 aus dem ersten Prisma 72 wieder aus, um die eine Seite des Zigarettenstranges 28 zu streifen. Anschließend tritt der erste Teilstrahl 601 durch eine rechtwinklig gerichtete erste Fläche 761 des dritten Prismas 76 ein und durch eine ebenfalls rechtwinklig gerichtete zweite Fläche 762 wieder aus, um dann auf die Sensorzeile 66 aufzutreffen. In gleicher Weise wird der benachbarte Teilstrahl 602 vom ersten Prisma 72 umgelenkt und durch das dritte Prisma 76 geleitet, wobei der zweite Teilstrahl 602 so vom ersten Teilstrahl 601 beabstandet ist, dass der zweite Teilstrahl 602 den Zigarettenstrang 28 an dessen gegenüberliegender anderer Seite streift.

Der dritte Teilstrahl 603 tritt in das zweite Prisma 74 durch dessen rechtwinklig gerichtete erste Fläche 741 ein, wird an einer gegenüberliegenden, in Bezug auf den auftreffenden Teilstrahl um 150° abgewinkelt angeordneten zweiten Fläche 742 des zweiten Prismas 74 reflektiert und tritt durch dessen rechtwinklig zum Teilstrahl gerichtete dritte Fläche 743 in Richtung auf den Zigarettenstrang 28 wieder aus, um diesen an der einen Seite zu steifen. Anschließend tritt der dritte Teilstrahl 603 in das dritte Prisma 76 durch eine rechtwinklig zu diesem Teilstrahl gerichtete dritte Fläche 763 ein, wird an einer gegenüberliegenden, in Bezug auf den auftreffenden Teilstrahl um 150° abgewinkelt angeordneten vierten Fläche 764 reflektiert und tritt aus dem dritten Prisma 76 durch dessen rechtwinklig zu diesem Teilstrahl verlaufende zweite Fläche 762 wieder aus, um dann auf die Sensorzeile 66 aufzutreffen. Der vierte Teilstrahl 604 verläuft parallel zum dritten Teilstrahl 603 und wird somit dem gleichen Verlauf unterworfen, ist jedoch vom dritten Teilstrahl 603 so beabstandet, dass er den Zigarettenstrang 28 an der gegenüberliegenden anderen Seite streift.

Der fünfte Teilstrahl 605 läuft unreflektiert durch das zweite Prisma 74, indem er durch dessen rechtwinklig zu ihm gerichtete erste Fläche 741 in das zweite Prisma 74 eintritt und durch dessen ebenfalls zu ihm rechtwinklig verlaufende vierte Fläche 744 aus dem zweiten Prisma 74 wieder austritt, um dann den Zigarettenstrang 28 an der einen Seite zu streifen. Anschließend tritt der fünfte Teilstrahl 605 durch eine ebenfalls rechtwinklig gerichtete vierte Fläche 724 des ersten Prismas 72 in dieses ein, wird an dessen geneigter zweiter Fläche 722 reflektiert und tritt durch dessen rechtwinklig zu ihm gerichtete fünfte Fläche 725 wieder aus, um dann auf die Sensorzeile 66 zu treffen. Den gleichen Verlauf erhält auch der sechste Teilstrahl 606, der also parallel zum fünften Teilstrahl 605 gerichtet, jedoch zu diesem so beabstandet ist, dass er den Zigarettenstrang 28 an dessen gegenüberliegender anderer Seite streift.

Demnach bilden ähnlich wie bei der ersten Ausführung gemäß Fig. 2 die ersten und zweiten Teilstrahlen 601 und 602, die dritten und vierten Teilstrahlen 603 und 604 sowie die fünften und sechsten Teilstrahlen 605 und 606 jeweils ein Paar gleicher Ausrichtung und gleichen Verlaufes.

Wie aus Fig. 3 und der zugehörigen Beschreibung deutlich wird, dienen die drei Prismen 72, 74, 76 sowohl als Strahlenteilereinrichtung zur Aufteilung des parallelen Strahls 54b in mehrere, hier sechs, Teilstrahlen 601 bis 606, die in unterschiedlichen Richtungen auf den Zigarettenstrang 28 geleitet werden, sowie außerdem auch als Strahlenvereinigungseinrichtung, um die einzelnen Teilstrahlen 601 bis 606 wieder in eine parallele nebeneinanderliegende Ausrichtung zur Bildung eines gemeinsamen einzigen Strahls zu bringen, der senkrecht auf die Sensorzeile 66 auftrifft.

Hinsichtlich weiterer Merkmale und Eigenschaften wird auf die Beschreibung der ersten Ausführung der optischen Messanordnung 50 gemäß Fig. 2 zur Vermeidung von Wiederholungen vermieden.

Die Sensorzeile 66 weist mehrere nebeneinander liegende Sensorelemente auf, von denen jeweils ein Sensorelement einem Teilstrahl zugeordnet ist. Es ist aber auch denkbar, mehrere Sensorelemente jeweils zu einer Gruppe zusammenzufassen, welche dann definiert einem Teilstrahl zugeordnet ist. Zweckmäßigerweise sollen die Sensorelemente aus Charged-Coupled-Device-Elementen bestehen.

Auf die Sensorzeile 66 werden nebeneinander die Hell-Dunkel-Übergänge der aus den verschiedenen Richtungen auf den Zigarettenstrang 28 treffenden Teilstrahlen projiziert. Diese Hell-Dunkel-Übergänge sind in Figur 2 in einem der Sensorzeile 66 zugeordneten Graph schematisch angedeutet.

In einer der Sensorzeile 66 nachgeschalteten (in den Figuren nicht dargestellten) Auswerteeinheit wird dann aus diesen Hell-Dunkel-Übergängen der Durchmesser des Zigarettenstranges 28 jeweils in den senkrecht zu den Teilstrahlen verlaufenden Richtungen ermittelt. Somit erhält man eine exakte Messung der Dicke des Zigarettenstranges 28 in verschiedenen Winkelrichtungen. Da bei der in Figur 2 dargestellten ersten Ausführung acht Teilstrahlen 601 bis 608 verwendet werden, die zu vier Paaren zusammengefasst sind, kann die Dicke des Zigarettenstranges 28 über eine 45°-Teilung ermittelt werden. Demnach wird bei der ersten Ausführung gemäß Fig.2 der Zigarettenstrang 28 in vier unterschiedlichen Richtungen vermessen. Da demgegenüber bei der in Fig. 3 dargestellten zweiten Ausführung nur sechs Teilstrahlen 601 bis 606 verwendet werden, die zu drei Paaren zusammengefasst sind, findet bei der zweiten Ausführung gemäß Fig. 3 eine Vermessung des Zigarettenstranges 28 nur in drei Richtungen statt.

Wird die Anzahl der verwendeten Teilstrahlen erhöht, lässt sich eine größere Anzahl von Messungen bei einer kleineren Winkelteilung realisieren, wodurch die Messgenauigkeit noch weiter erhöht werden kann. Umgekehrt führt eine Verringerung der Anzahl der verwendeten Teilstrahlen zu einer geringeren Anzahl von Messungen über einen größeren Winkelabstand.

Schließlich kann die Auswerteeinrichtung einen Mittelwertbildner zur Bildung eines Mittelwertes aus den Signalen von der Sensorzeile 66 aufweisen, um einen Durchschnittswert für den Durchmesser des Zigarettenstranges 28 zu ermitteln.

## Patentansprüche

1. Vorrichtung zum Messen des Durchmessers mindestens eines stabförmigen Gegenstandes (28) der Tabak verarbeitenden Industrie, mit mindestens einer, vorzugsweise optischen, Messanordnung (50), die eine Strahlenquelle (52) zur Erzeugung eines Strahls (54a, 54b) zum Bestrahlen des stabförmigen Gegenstandes (28) und eine Erfassungseinrichtung (66) zur Erzeugung von die vom stabförmigen Gegenstand (28) hervorgerufene Abschattung des Strahls angebenden Signalen aufweist, wobei der stabförmige Gegenstand (28) im Strahlengang zwischen der Strahlenquelle (52) und der Erfassungseinrichtung (66) positionierbar oder durch den Strahlengang führbar und aus den von der Erfassungseinrichtung (66) erzeugten Signalen der Durchmesser des stabförmigen Gegenstandes (28) ermittelbar ist, und mit einer Strahlenteilereinrichtung, die den Strahl von der Strahlenquelle (52) in mehrere Teilstrahlen (601-608) aufteilt und in unterschiedlichen Richtungen auf den stabförmigen Gegenstand (28) leitet, wobei die Erfassungseinrichtung (66) mehrere Sensormittel aufweist, von denen jedes Sensormittel einem Teilstrahl zugeordnet ist und ein die vom stabförmigen Gegenstand (28) hervorgerufene Abschattung des Teilstrahles angebendes Signal erzeugt,
**gekennzeichnet durch** eine Strahlenvereinigungseinrichtung, die die Teilstrahlen (601-608) nach Auftreffen auf den stabförmigen Gegenstand (28) zu einem gemeinsamen Strahl wieder vereinigt, in dem die Teilstrahlen (601-608) im Wesentlichen parallel zueinander ausgerichtet sind.

2. Vorrichtung nach Anspruch 1,
**dadurch gekennzeichnet, dass** die Sensormittel im wesentlichen auf einer Linie nebeneinander angeordnet sind.

3. Vorrichtung nach Anspruch 1 oder 2,
**dadurch gekennzeichnet, dass** die Strahlenvereinungseinrichtung Spiegel (641-648) aufweist, die die Teilstrahlen (601-608) in die gleiche Richtung umlenken.

4. Vorrichtung nach mindestens einem der vorangegangenen Ansprüche,
**dadurch gekennzeichnet dass** die Strahlenvereinigungseinrichtung mindestens ein Prisma (72, 74, 76) aufweist, das die Teilstrahlen (601 bis 606) in die gleiche Richtung umlenkt.

5. Vorrichtung nach mindestens einem der vorangegangenen Ansprüche,
**dadurch gekennzeichnet, dass** die Strahlenteilereinrichtung die Teilstrahlen derart auf den stabförmigen Gegenstand (28) leitet, dass jeder Teilstrahl vom stabförmigen Gegenstand (28) nur teilweise abgeschattet wird.

6. Vorrichtung nach mindestens einem der vorangegangenen Ansprüche, **gekennzeichnet durch** eine der Erfassungseinrichtung (66) nachgeschaltete Auswerteeinrichtung zur Ermittlung des Durchmessers des stabförmigen Gegenstandes (28) aus den Signalen von der Erfassungseinrichtung.

7. Vorrichtung nach Anspruch 6,
**dadurch gekennzeichnet, dass** die Auswerteeinrichtung einen Mittelwertbildner zur Bildung eines Mittelwertes aus den Signalen von den Sensormitteln ausweist.

8. Vorrichtung nach mindestens einem der vorangegangenen Ansprüche,
**dadurch gekennzeichnet, dass** die Strahlenteilereinrichtung Spiegel (621-628) aufweist, die aus dem Strahl zumindest einige der Teilstrahlen (601-608) in unterschiedliche Richtungen auf den stabförmigen Gegenstand (28) umlenken.

9. Vorrichtung nach mindestens einem der vorangegangenen Ansprüche,
**dadurch gekennzeichnet, dass** die Strahlenteilereinrichtung mindestens ein Prisma (72, 74, 76) aufweist, dass aus dem Strahl zumindest einige der Teilstrahlungen (601 bis 606) in unterschiedliche Richtungen auf den stabförmigen Gegenstand (28) umlenkt.

10. Vorrichtung nach mindestens einem der vorangegangenen Ansprüche,
**gekennzeichnet durch** eine zwischen der Strahlenquelle (52) und der Strahlentellereinrichtung vorgesehene Anordnung (56) zur im Wesentlichen parallelen Ausrichtung des Strahls (54b) von der Strahlenquelle (52).

11. Vorrichtung nach Anspruch 10,
**dadurch gekennzeichnet, dass** die Anordnung eine Kollimatorlinse (56) aufweist.

12. Vorrichtung nach Anspruch 10 oder 11,
**gekennzeichnet durch** eine der Anordnung nachgeschaltete Zylinder-Linse (58).

13. Vorrichtung nach mindestens einem der vorangegangenen Ansprüche,
**dadurch gekennzeichnet, dass** die Strahlenquelle (52) einen Laser, insbesondere eine Laser-Diode, aufweist.

14. Vorrichtung nach mindestens einem vorangegangenen Ansprüche,
**dadurch gekennzeichnet, dass** die Sensormittel aus Charged-Coupled-Device-Elementen bestehen

15. Verfahren zum Messen des Durchmessers mindestens eines stabförmigen Gegenstandes (28) der Tabak verarbeitenden Industrie, mit den Schritten,
mit Hilfe einer Strahlenteilereinrichtung einen, vorzugsweise optischen, Strahl (54b) in mehrere Teilstrahlen (601 bis 608) aufzuteilen und die mehreren Teilstrahlen (601 bis 608) in unterschiedlichen Richtungen auf den stabförmigen Gegenstand (28) zu leiten,
in einer Erfassungseinrichtung (66) mehrere Signale zu erzeugen, von denen jeweils ein Signal die vom stabförmigen Gegenstand (28) hervorgerufene Abschattung eines Teilstrahles angibt, und
aus den Signalen den Durchmesser des stabförmigen Gegenstandes (28) zu ermitteln,
**dadurch gekennzeichnet, dass** die Teilstrahlen (601-608) nach Auftreffen auf den stabförmigen Gegenstand (28) mit Hilfe einer Strahlenvereinigungseinrichtung wieder zu einem gemeinsamen Strahl vereinigt werden, in dem die Teilstrahlen (601-608) im Wesentlichen parallel zueinander ausgerichtet sind.

16. Verfahren nach Anspruch 15,
**dadurch gekennzeichnet, dass** die Strahlenteilereinrichtung die Teilstrahlen (601-608) derart auf den stabförmigen Gegenstand (28) leitet, dass jeder Teilstrahl vom stabförmigen Gegenstand (28) nur teilweise abgeschattet wird.

17. Verfahren nach Anspruch 15 oder 16,
**gekennzeichnet durch** den zusätzlichen Schritt,
mit Hilfe eines Mittelwertbildners einen Mittelwert aus aus unterschiedlichen Teilstrahlen erzeugten Signalen zu bilden.

18. Verfahren nach mindestens einem der Ansprüche 15 bis 17,
**dadurch gekennzeichnet, dass** der Strahl (54b) vor Aufteilung in Teilstrahlen (601-608) parallel ausgerichtet wird.

## Claims

1. Device for measuring the diameter of at least one rod-shaped object (28) in the tobacco processing industry, with at least one, preferably optical, measuring arrangement (50) comprising a radiation source (52) for generating a beam (54a, 54b) for irradiating the rod-shaped object (28) and a detection system (66) for generating signals representing the shadowing of the beam caused by the rod-shaped object (28), and the rod-shaped object (28) can be positioned in the optical path between the radiation source (52) and detection system (66) or can be fed through the optical path, and the diameter of the rod-shaped object (28) can be determined from the signals generated by the detection system (66), and with a beam splitter device which splits the beam from the radiation source (52) into several part-beams (601-608) and directs them onto the rod-shaped object (28) in different directions, and the detection system (66) has several sensor means, each of which sensor means is assigned to a part-beam and generates a signal representing the shadowing of the part-beam caused by the rod-shaped object (28),
**characterised by** a beam joining device which joins the part-beams (601-608) to form a common beam again after they have made contact with the rod-shaped object (28) so that the part-beams (601-608) are oriented essentially parallel with one another.

2. Device as claimed in claim 1,
**characterised in that** the sensor means are disposed next to one another essentially in a row.

3. Device as claimed in claim 1 or 2,
**characterised in that** the beam joining device has mirrors (641-648) which deflect the part-beams (601-608) in the same direction.

4. Device as claimed in at least one of the preceding claims,
**characterised in that** the beam joining device has at least one prism (72, 74, 76) which deflects the part-beams (601-606) in the same direction.

5. Device as claimed in at least one of the preceding claims,
**characterised in that** the beam splitter device directs the part-beams onto the rod-shaped object (28) so that every part-beam is only partially shadowed by the rod-shaped object (28).

6. Device as claimed in at least one of the preceding claims,
**characterised by** an evaluation device connected downstream of the detection system (66) for determining the diameter of the rod-shaped object (28) from the signals from the detection system.

7. Device as claimed in claim 6,
**characterised in that** the evaluation device has a signal averager for determining a mean value from the signals from the sensor means.

8. Device as claimed in at least one of the preceding claims,
**characterised in that** the beam splitter device has mirrors (621-628) which deflect at least some of the part beams (601-608) from the beam onto the rod-shaped object (28) in different directions.

9. Device as claimed in at least one of the preceding claims,
**characterised in that** the beam splitter device has at least one prism (72, 74, 76) which deflects at least some of the part-beams (601 to 606) out of the beam onto the rod-shaped object (28) in different directions.

10. Device as claimed in at least one of the preceding claims,
**characterised by** an arrangement (56) disposed between the radiation source (52) and the beam splitter device for orienting the beam (54b) from the radiation source (52) essentially parallel.

11. Device as claimed in claim 10,
**characterised in that** the arrangement has a collimator lens (56).

12. Device as claimed in claim 10 or 11,
**characterised by** a cylindrical lens (58) connected downstream of the arrangement.

13. Device as claimed in at least one of the preceding claims,
**characterised in that** the radiation source (52) has a laser, in particular a laser diode.

14. Device as claimed in at least one of the preceding claims,
**characterised in that** the sensor means are charged-coupled device elements.

15. Method of measuring the diameter of at least one rod-shaped object (28) in the tobacco processing industry, comprising the steps of
splitting a preferably optical beam (54b) into several part-beams (601 to 608) with the aid of a beam splitter device and directing the several part-beams (601 to 608) in different directions onto the rod-shaped object (28), generating several signals in a detection system (66), each of which signals represents the shadowing of a part-beam caused by the rod-shaped object (28), and
determining the diameter of the rod-shaped object (28) from the signals,
**characterised in that** the part-beams (601-608) are joined to a common beam again by means of a beam joining device, after having made contact with the rod-shaped object (28), in which the part-beams (601-608) are oriented essentially parallel with one another.

16. Method as claimed in claim 15,
**characterised in that** the beam splitter device directs the part-beams (601-608) onto the rod-shaped object (28) so that every part-beam is only partially shadowed by the rod-shaped object (28).

17. Method as claimed in claim 15 or 16,
**characterised by** the additional step of
forming a mean value from signals generated from different part-beams by means of a signal averager.

18. Method as claimed in at least one of claims 15 to 17,
**characterised in that** the beam (54b) is oriented parallel before being split into part beams (601-608).

## Revendications

1. Dispositif pour la mesure du diamètre d'au moins un objet (28) en forme de bâtonnet de l'industrie de transformation du tabac, comportant au moins un ensemble de mesure (50), de préférence optique, qui comprend une source de rayonnement (52) pour produire un faisceau (54a, 54b) destiné à irradier l'objet (28) en forme de bâtonnet et un dispositif de détection (66) destiné à générer des signaux indiquant l'occultation du faisceau provoquée par l'objet (28) en forme de bâtonnet, l'objet (28) en forme de bâtonnet pouvant être positionné sur la trajectoire du faisceau entre la source de rayonnement (52) et le dispositif de détection (66), ou pouvant être guidé à travers la trajectoire du faisceau, le diamètre de l'objet (28) en forme de bâtonnet pouvant être déterminé à partir des signaux générés par le dispositif de détection (66), ainsi qu'un dispositif séparateur de faisceau, qui subdivise le faisceau provenant de la source de rayonnement (52) en plusieurs faisceaux partiels (601-608) et qui l'émet selon des directions différentes sur l'objet (28) en forme de bâtonnet, le dispositif de détection (66) comportant plusieurs moyens capteurs, chaque moyen capteur étant affecté à un faisceau partiel, et générant un signal qui indique l'occultation du faisceau partiel provoquée par l'objet (28) en forme de bâtonnet, **caractérisé par** un dispositif combinateur de faisceaux, qui recombine en un faisceau commun les faisceaux partiels (601-608) après que ces derniers ont touché l'objet (28) en forme de bâtonnet, faisceau commun dans lequel les faisceaux partiels (601-608) sont orientés pour l'essentiel parallèlement les uns aux autres.

2. Dispositif selon la revendication 1, **caractérisé en ce que** les moyens capteurs sont disposés pour l'essentiel sur une ligne les uns à côté des autres.

3. Dispositif selon la revendication 1 ou 2, **caractérisé en ce que** le dispositif combinateur de faisceaux comprend des miroirs (641-648), qui dévient les faisceaux partiels (601-608) dans la même direction.

4. Dispositif selon au moins l'une des revendications précédentes, **caractérisé en ce que** le dispositif combinateur de faisceaux comprend au moins un prisme (72, 74, 76), qui dévie les faisceaux partiels (601 à 606) dans la même direction.

5. Dispositif selon au moins l'une des revendications précédentes, **caractérisé en ce que** le dispositif séparateur de faisceau émet les faisceaux partiels sur l'objet (28) en forme de bâtonnet de telle sorte que chaque faisceau partiel ne soit que partiellement occulté par l'objet (28) en forme de bâtonnet.

6. Dispositif selon au moins l'une des revendications précédentes, **caractérisé par** un dispositif d'évaluation, monté en aval du dispositif de détection (66), et destiné à déterminer le diamètre de l'objet (28) en forme de bâtonnet à partir des signaux du dispositif de détection.

7. Dispositif selon la revendication 6, **caractérisé en ce que** le dispositif d'évaluation comprend un moyenneur destiné à former une moyenne à partir des signaux des moyens capteurs.

8. Dispositif selon au moins l'une des revendications précédentes, **caractérisé en ce que** le dispositif séparateur de faisceau comprend des miroirs (621-628), qui dévient du faisceau au moins quelques-uns des faisceaux partiels (601-608) sur l'objet (28) en forme de bâtonnet selon des directions différentes.

9. Dispositif selon au moins l'une des revendications précédentes, **caractérisé en ce que** le dispositif séparateur de faisceau comprend au moins un prisme (72, 74, 76) qui à partir du faisceau dévie au moins quelques-uns des faisceaux partiels (601 à 606) sur l'objet (28) en forme de bâtonnet selon des directions différentes.

10. Dispositif selon au moins l'une des revendications précédentes, **caractérisé par** un arrangement (58), prévu entre la source de rayonnement (52) et le dispositif séparateur de faisceau, destiné à assurer une orientation pour l'essentiel parallèle du faisceau (54b) provenant de la source de rayonnement (52).

11. Dispositif selon la revendication 10, **caractérisé en ce que** l'arrangement comprend une lentille collimatrice (56).

12. Dispositif selon la revendication 10 ou 11, **caractérisé par** une lentille cylindrique (58) installée en aval de l'arrangement.

13. Dispositif selon au moins l'une des revendications précédentes, **caractérisé en ce que** la source de rayonnement (52) comprend un laser, en particulier une diode laser.

14. Dispositif selon au moins l'une des revendications précédentes, **caractérisé en ce que** les moyens capteurs sont constitués d'éléments de dispositifs à couplage de charges.

15. Procédé de mesure du diamètre d'au moins un objet (28) en forme de bâtonnet de l'industrie de transformation du tabac, comportant les étapes consistant à diviser en plusieurs faisceaux partiels (601 à 608) un faisceau (54b), de préférence optique, à l'aide d'un dispositif séparateur de faisceau, et à diriger les faisceaux partiels (601 à 608) sur l'objet (28) en forme de bâtonnet selon des directions différentes ; à générer dans un dispositif de détection (66) plusieurs signaux, chaque signal indiquant l'occultation d'un faisceau partiel provoquée par l'objet (28) en forme de bâtonnet ; et, à partir des signaux, à déterminer le diamètre de l'objet (28) en forme de bâtonnet ; **caractérisé en ce que** les faisceaux partiels (601-608) sont, après avoir touché l'objet (28) en forme de bâtonnet, recombinés à l'aide d'un dispositif combinateur de faisceaux en un faisceau commun, dans lequel les faisceaux partiels (601-608) sont pour l'essentiel orientés parallèlement les uns aux autres.

16. Procédé selon la revendication 15, **caractérisé en ce que** le dispositif séparateur de faisceau émet les faisceaux partiels (601-608) sur l'objet (28) en forme de bâtonnet de telle sorte que chaque faisceau partiel ne soit que partiellement occulté par l'objet (28) en forme de bâtonnet.

17. Procédé selon la revendication 15 ou 16, **caractérisé par** l'étape supplémentaire consistant à former, à l'aide d'un moyenneur, une moyenne à partir des signaux générés à partir des différents faisceaux partiels.

18. Procédé selon au moins l'une des revendications 15 à 17, **caractérisé en ce que** le faisceau (54b) est orienté parallèlement avant la division en faisceaux partiels (601-608).
